(19)

**Europäisches Patentamt**
**European Patent Office**
**Office européen des brevets**

(11) **EP 4 260 098 B1**

(12) **EUROPEAN PATENT SPECIFICATION**

(45) Date of publication and mention
of the grant of the patent:
**01.10.2025 Bulletin 2025/40**

(21) Application number: **21902821.4**

(22) Date of filing: **02.12.2021**

(51) International Patent Classification (IPC):
**G01S 7/481** (2006.01)　　**G01S 13/86** (2006.01)
**G01S 17/08** (2006.01)

(52) Cooperative Patent Classification (CPC):
**G01S 13/865; G01S 7/4815; G01S 17/08**

(86) International application number:
**PCT/IB2021/061249**

(87) International publication number:
**WO 2022/123404 (16.06.2022 Gazette 2022/24)**

(54) **APPARATUS AND METHOD FOR LASER RANGE-FINDING**

VORRICHTUNG UND VERFAHREN ZUR LASERENTFERNUNGSBESTIMMUNG

APPAREIL ET PROCÉDÉ DE TÉLÉMÉTRIE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2020　IL 27928020**

(43) Date of publication of application:
**18.10.2023 Bulletin 2023/42**

(73) Proprietor: **Rafael Advanced Defense Systems
Ltd.**
**3102102 Haifa (IL)**

(72) Inventors:
• **GOLUBCHIK, Daniel**
**2751419 Kiryat Bialik (IL)**
• **MALINE, Ahron**
**2178103 Karmiel (IL)**

(74) Representative: **Kancelaria Eupatent.pl Sp. z o.o.**
**ul. Kilinskiego 185**
**90-348 Lodz (PL)**

(56) References cited:
**WO-A1-2020/016824　　CN-A- 1 825 138
CN-A- 1 825 138**

• **HWANG SUNGUI, JUNHWAN JANG, KYIHWAN
ARK: "Note: Continuous-Wave Time-of-Flight
Laser Sc anner Using Two Laser Diodes to Avoid
2? Ambiguity", REVIEW OF SCIENTIFIC
INSTRUMENTS, vol. 84, no. 8, 30 August 2013
(2013-08-30), pages 086110, XP055944011**
• **YAN PEIJIA: "High Precision Hybrid Pulse and
Phase-Shift Laser Ranging System", THESIS,
CONCORDIA UNIVERSITY SCHOOL OF
GRADUAT STUDIES, 1 October 2018
(2018-10-01), Concordia University School of
Graduat Studies, XP055944016, Retrieved from
the Internet <URL:https://spectrum.library.
concordia.ca/984626/1/Yan_MASc_F2018.pdf>
[retrieved on 20220719]**
• **YU CHEN, YU CHEN, CHUNYANG WANG, HUAN
GAO, HUAN LIU: "Multi-Frequency Modulation
Laser Range Finding System", MODERN
APPLIED SCIENCE, vol. 9, no. 4, 10 December
2014 (2014-12-10), pages 328, XP055944027,
ISSN: 1913-1844, DOI: 10.5539/mas.v9n4p328**

**Description**

FIELD OF THE INVENTION

The present invention relates to laser range-finding, and, in particular, to an apparatus and method for accurately measuring range to a target illuminated by a coherent beam combining (CBC) system.

BACKGROUND OF THE INVENTION

In electromagnetic range-finding systems, the range to a target is found by measuring the time-of-flight (TOF) of an electromagnetic wave as it propagates from a source to a target and from the target to a receiver. The source generally transmits a modulated signal, which may be a pulsed wave or a continuous wave having amplitude, or intensity, modulation. The TOF measurement accuracy depends primarily on the modulation bandwidth, which is typically much higher for laser systems than for microwave systems, and on the signal-to-noise ratio of the reflected signal from the target.

In prior art laser range-finding systems based upon coherent detection, optical interference is used to measure the relative optical phase between the beam reflected by a target and a delayed portion of the beam emitted by the laser source. Coherent detection requires the source to have a coherence length which is a substantial fraction of the target range. This limits the available power and useful range of coherent detection systems.

An article by Chen Yu et. al., entitled "Multi-Frequency Modulation Laser Range Finding System" and appearing in Modern Applied Science, Vol. 9, No. 4, in 2015 (XP055944027), presents a range finding system using a Multiple Frequency Phase Shift (MFPS) method. In this method, the intensity of a seed laser source is modulated in time by a signal having several frequencies. The reflected signal is demodulated and a TOF estimate is generated using a coordinate rotation angle solver algorithm.

In directed energy applications, the system imposes stringent constraints on the required accuracy and update rate of range measurements. Exemplary requirements are a range measurement accuracy of $\pm 1$ meter at a target range of at least one kilometer. Assuming a nominal light velocity (c) equal to $3 \times 10^8$ meters/sec, the target TOF for two-way (round trip) propagation is at least (2 x 1000 meters / c) = 6.67 microseconds ($\mu$sec), and the required TOF measurement accuracy is (2 x $\pm 1$ meter / c) = $\pm 6.67$ nanoseconds (nsec).

Furthermore, if the target is moving radially with respect to the source at, say, 100 meters/sec, the required update rate may well exceed one thousand measurements per second.

Prior art laser range-finders are unable to achieve a suitable combination of laser power, intensity modulation bandwidth, and laser coherence length which satisfies the above requirements with respect to target range, and TOF measurement accuracy and update rate.

In a CBC system, several laser sub-beams are formed by amplifying a seed laser, and are combined in phase to form an outgoing beam. A beam director optical system steers the beams to illuminate and overlap at a point on the target surface. CBC systems are power scalable, and a laser power on the order of several kilowatts has been demonstrated. A portion of the illumination is reflected from the target in the direction of a receiver telescope and is processed by optical and electrical hardware components to form a time-varying received signal. The received signal is analyzed, for example in a Target-in-the-Loop (TIL) system, in order to measure and control the relative phases between the sub-beams.

International Publication Number WO2020/016824 A1 to D. Golubchik et al., dated 23-January-2020 and entitled "Coherent Beam Combination (CBC) Systems and Methods", discloses a coherent beam combination system (1) which includes an array of beam sources (12a, 12b and 12c) generating coherent beams directed towards a target (T). Phase modulators (14a, 14b and 14c) allow adjustment of relative phase offsets of the beams. A detector (16) monitors an intensity of the radiation impinging on an area of the target (T). A controller (18) receives the intensity parameter and controls a phase adjustment of the beams according to a deterministic (i.e. quantitative) measurement of a phase offset of each beam relative to a representative phase of the sum of all the other beams. This is achieved by using interferometric techniques, referred to as Target In-the-Loop Interferometry.

SUMMARY OF THE INVENTION

The invention is set out in the appended set of claims.

The invention overcomes the limitations of the prior art by providing an apparatus and method for accurate range-finding for a target illuminated by at least two sub-beams of a coherent beam combining (CBC) system. The invention utilizes optical phase modulation of laser sub-beams having relatively low coherence length, in order to achieve a high TOF measurement accuracy and a high TOF measurement update rate, even in the presence of electronic noise.

According to one aspect of the presently disclosed subject matter, there is provided a range-finding apparatus in communication with a coherent beam combining (CBC) system which illuminates a target with at least two partially coherent sub-beams, the apparatus including a phase modulation controller providing at least one optical phase modulation signal to the CBC system, and a signal processor configured to receive a time-varying received intensity signal from the CBC system and to receive an initial measurement of target range having an initial uncertainty. The signal processor is configured to calculate frequency components of the received intensity signal; to form rotated frequency components by rotating the frequency components through an angle proportional to a time-of-flight correction; to calculate an objective function depending upon the rotated frequency components; to determine corrected measurement of target range having an uncertainty which is less than the initial uncertainty.

According to some aspects, the at least one optical phase modulation signal includes a sinusoidal frequency or a linear frequency modulation signal.

According to some aspects, at least one optical phase modulation signal has a bandwidth whose value is in a range of ten kilohertz to one hundred megahertz.

According to some aspects, the frequency components include fundamental and second harmonic frequencies of the received intensity signal.

According to some aspects, the signal processor sends feedback to the phase modulation controller including one or more updated parameters of the at least one optical phase modulation signal.

According to some aspects, the initial measurement of target range is provided by the CBC system or by an external range-finding device.

According to some aspects, the external range-finding device is selected from a group including a microwave radar, a millimeter-wave radar, and a forward looking infrared system.

According to some aspects, the objective function depends upon absolute values of the rotated frequency components.

According to some aspects, the objective function includes a sum-of-absolute-values objective function and/or a sum-of-squares objective function.

According to some aspects, the corrected measurement of target range has an uncertainty which is equal in value to the initial uncertainty divided by a factor of at least 300.

According to some aspects, the at least two partially coherent sub-beams have coherence lengths whose values are less than or equal to one meter.

According to another aspect of the presently disclosed subject matter, there is provided a range-finding method for use with a coherent beam combining (CBC) system which illuminates a target with at least two partially coherent laser sub-beams; and the method includes the following steps:

a) providing a CBC system including at least two partially coherent laser sub-beams and an optical phase modulator;
b) sending at least one optical phase modulation signal to the CBC system;
c) receiving a time-varying received intensity signal from the CBC system, and an initial measurement of target range from either the CBC system or an external range-finding device; and
d) calculating frequency components of the intensity signal;
e) rotating the frequency components through an angle proportional to a time-of-flight correction;
f) calculating an objective function depending on the rotated frequency components; and
g) determining a global minimum of the objective function;
h) calculating a corrected measurement of target range having an uncertainty which is less than that of initial measurement of target range.

## BRIEF DESCRIPTION OF THE DRAWINGS

The invention is herein described, by way of example only, with reference to the accompanying drawings. Like reference numerals are used to denote similar or like elements in the drawings.

FIG. 1 is a schematic representation of the major components of an exemplary range-finding apparatus, according to the invention.

FIG. 2 is a plot of an exemplary objective function $F(\delta t)$, with and without noise.

FIG. 3 is a plot of an exemplary TOF measurement success ratio versus noise spectral density.

FIG. 4 is a block diagram of an exemplary range-finding method, according to the principles of the invention.

## DETAILED DESCRIPTION OF THE PREFERRED EMBODIMENTS

The invention is an apparatus and method for accurate range-finding of a target illuminated by sub-beams of a CBC system. The principles and practical use of the invention may be better understood with reference to the drawings and the accompanying description.

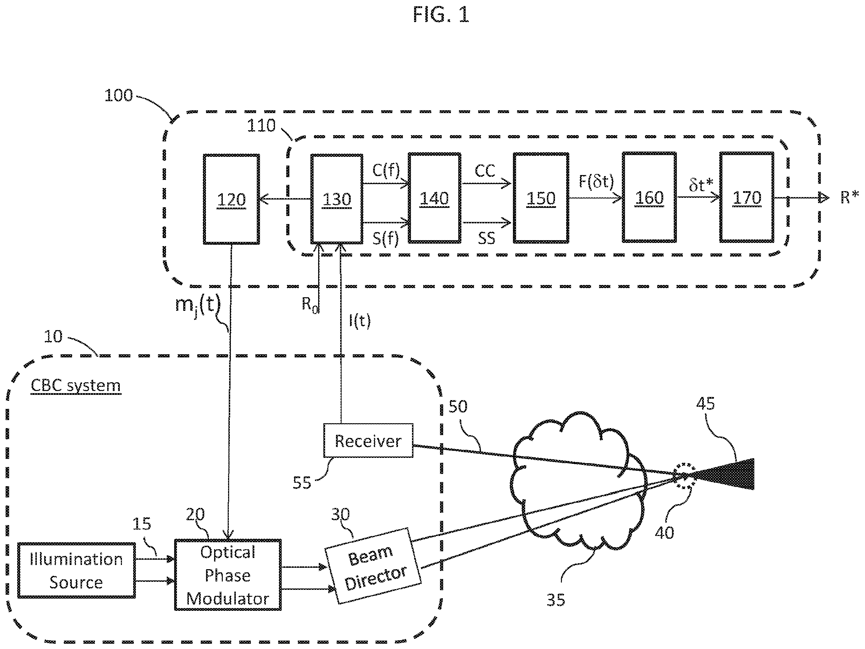

FIG. 1 shows a schematic representation of an exemplary range-finding apparatus 100 according to the invention. Phase modulation controller 120 sends at least one time-varying optical phase modulation signal to an optical phase modulator 20 in a CBC system 10. Modulator 20 applies the phase modulation to at least one of the high-power laser sub-beams 15 emitted by the CBC illumination source.

The coherence length of each of the laser sub-beams 15 may typically be on the order of one meter or less. Consequently, optical path differences between the sub-beam sources must be adjusted with millimeter precision to ensure coherent combining. By way of comparison with the prior art, existing high-power laser rangefinders that use coherent detection typically require a laser coherence length of the order of at least several meters, and in some cases tens or hundreds of kilometers. On leaving modulator 20, the relative optical phases of the sub-beams include additional phase shifts caused by electronic noise, acoustic vibrations, and thermal variations present in the optical path of the sub-beams.

The sub-beams 15 are numbered j=1 to N (N≥2), where N is the total number of sub-beams, including both un-modulated and modulated sub-beams. The optical phase modulation signal of the j-th sub-beam is zero if the beam is un-modulated and is a non-zero, time-varying function, $m_j(t)$, if the sub-beam is modulated. The functions $m_j(t)$ have a bandwidth in the Fourier domain which may range from kilohertz (KHz) to gigahertz (GHz) depending on the required accuracy of the range measurement. Non-limiting, exemplary optical phase modulation signals include linear frequency modulation (LFM), or "chirp", signals and sinusoidal signals. The latter have the form:

$$m_j(t) = A_j \sin (2\pi f_j t) + B_j \quad (\text{for } j = 1 \text{ to } N) \qquad \text{(Equation 1)}$$

where, for the j-th modulated sub-beam, $f_j$ is the modulation frequency, $A_j$ is a constant modulation amplitude, and $B_j$ is a constant phase offset. Exemplary values of $f_j$ are between 10 kilohertz (KHz) and 100 megahertz (MHz).

Phase modulation controller 120 provides the voltages and frequencies required for the optical phase modulation of the sub-beams. For example, in the case of an electrooptical modulator, such as Thorlabs® LN81S-FC, the voltage required to change the phase by $\pi$ is approximately 6V. To provide this voltage, controller 120 may, for example, convert a digital signal to analog using a digital-to-analog converter (DAC), or a voltage-controlled oscillators (VCO), followed by an RF amplifier to reach the required voltage level.

In FIG. 1, a CBC beam director 30 steers the sub-beams with high angular accuracy, typically on the order of a few micro-radians, so that the sub-beams overlap and form a single combined spot 40 on a surface of a target 45. As they propagate through the atmosphere, the sub-beams accumulate relative phase differences, such as time-varying perturbations cause by moving air masses in a region 35 of atmospheric turbulence. Thus, the relative optical phases of the sub-beams impinging on the target are generally not known a priori.

At the surface of the target, the total time-varying complex electric field, U(t), may be represented by $U(t) = \Sigma U_j(t)$ where the summation is over all of the sub-beams, namely j = 1 to N. The time-varying complex electric field of the j-th sub-beam, $U_j(t)$, is given by,

$$U_j(t) = u_j \exp i\{-2\pi ct/\lambda + \phi_j(t) + m_j(t) \} \qquad \text{(Equation 2)}$$

Here $u_j$ is an unknown positive amplitude, $i=\sqrt{-1}$, "exp" is the exponential function, "c" is the speed of light, and $\lambda$ is the wavelength of sub-beam, typically belonging to the visible or infrared light spectrum. The functions $\phi_j(t)$ represent unknown relative phases contributed by such physical effects as atmospheric turbulence and target motion. These effects generally have frequency bandwidths in the KHz range or below, which is well below the frequency bandwidths of the optical phase modulation signals $m_j(t)$ provided by controller 120, which are typically in the MHz range.

A portion of the illumination impinging on the target forms a reflected beam 50, which is detected by CBC receiver 55. at distances of several kilometers, the received beam may be 9 to 12 orders of magnitude smaller than the illumination power emitted by the CBC system. Receiver 55 typically includes a telescopic optical system with an entrance aperture for the reflected beam, a high-gain, low-noise detector, such as Thorlabs® APD130C.

The received intensity signal I(t) is proportional to $|U(t)|^2$ and involves many intermodulation product terms. If $m_j(t)$ is a sinusoidal function with frequency $f_j$, I(t) includes sinusoidal terms having a frequency $f_j$, second-harmonic terms having a frequency $2f_j$, and other terms involving frequency sums and differences, such as $f_j \pm f_n$ ($n \neq j$).

Range-finding apparatus 100 includes a real-time signal processor 110 which is configured to receive the signal I(t) and to extract the target TOF information by performing a sequence of signal processing algorithms represented by blocks 130, 140, 150, 160, and 170 in FIG. 1. The signal processor 110 is typically implemented by a field-programmable gate array (FPGA) or an application-specific integrated circuit (ASIC).

Block 130 has several real-time functions. First, block 130 digitizes the received intensity signal I(t), provided by receiver 55, typically using an analog-to-digital converter (ADC) having a bandwidth at least 10 times higher than the highest modulation frequency.

Second, block 130 receives a coarse estimate of target range, $R_0$, which may be provided by an external sensor or by the CBC system 10. For example, the external sensor may be a microwave radar, a millimeter-wave radar, or a forward looking infrared (FLIR) system. Alternatively, the coarse estimate of target range may be provided by a range-finding apparatus similar to that of the invention, but with optical phase modulation signals having lower frequencies, for example 10 to 100 KHz. The uncertainty of coarse estimate $R_0$ is denoted by $\pm\Delta R$. Based on $R_0$, a coarse estimate of TOF is given by $T_0 = 2R_0/c$, with an uncertainty of $\pm\Delta T = \pm 2\Delta R/c$.

Third, block 130 calculates the quadrature and in-phase frequency components of I(t) (often called "I-Q components" or "orthogonal components") as follows:

$$C(f) = \int I(t) \cos 2\pi f (t\text{-}T_0) \, dt \qquad\qquad \text{(Equation 3)}$$

$$S(f) = \int I(t) \sin 2\pi f (t\text{-}T_0) \, dt \qquad\qquad \text{(Equation 4)}$$

The above integrals are evaluated over a time interval $|\, t\text{-}T_0 \,| \leq W$ for any given frequency, f. In the case of sinusoidal frequency modulation, the frequency components having large magnitudes are generally those corresponding to the fundamental frequency $f_j$, and to its second harmonic frequency, $2f_j$. In the case of more general modulation functions which are not sinusoidal, the equations 3 and 4 may be replaced by Hilbert transforms, as is known to those skilled in the art of signal processing. Typically, the integration time, 2W, depends upon the signal-to-noise ration of I(t), and is on the order of 10 to 100 $\mu$sec. The calculated values of C(f) and S(f) may be used to update the phase offsets $B_j$ in equation 1, and to feedback the updated parameters to the modulation controller 120, so as to enable coherent combination of the sub-beams at the target.

Block 140 rotates the frequency components C(f) and S(f) through an incremental phase angle ($2\pi f \, \delta t$), where $\delta t$ is a TOF correction that is yet to be determined. The rotated frequency components are given by:

$$CC(f, \delta t) = C(f) \cos 2\pi f \, \delta t + S(f) \sin 2\pi f \, \delta t \qquad\qquad \text{(Equation 5)}$$

$$SS(f, \delta t) = \text{-}S(f) \cos 2\pi f \, \delta t + C(f) \sin 2\pi f \, \delta t \qquad\qquad \text{(Equation 6)}$$

Block 150 calculates an objective function, F($\delta t$). The objective function is defined by:

$$F(\delta t) = \Sigma \quad |CC(f_j, \delta t)|^{\,p} + |SS(2f_j, \delta t)|^p \qquad\qquad \text{(Equation 7)}$$

where the summation is over all of the sub-beams, j= 1 to N. The power "p" may be a positive integer or a fractional value which is greater than 0. When p=1, the function F is referred to as a "sum-of-absolute-values" objective function; when p=2, it is referred to as a "sum-of-squares" objective function.

The function F($\delta t$) generally has many local minima, however, it achieves its global minimum value when $\delta t$ is equal to the true target TOF minus $T_0$. Physically, the global minimum of F occurs when both the CC term, which involves a quadrature component of the first harmonics, and the SS term, which involves an in-phase component of the second harmonics, are of small magnitude.

In general, the objective function of equation 7 may be extended to include terms with other frequency combinations, besides the fundamental and second harmonics of $f_j$. However, simulation results indicate that the objective function in equation 7 yields range estimates of very high accuracy, with no additional terms.

Block 160 determines a global minimum of the objective function F($\delta t$), over an interval $|\delta t| \leq \Delta T$, corresponding to the uncertainty of the initial TOF estimate $T_0$. To avoid choosing one of the local minima of F($\delta t$), the above interval is divided into a grid of closely spaced points, whose $\delta t$ values are separated, for example, by 1 nsec. or less, and the numerical values of F are calculated using equation 7. The point ($\delta t_{min}$, $F_{min}$) corresponding to the global minimum is selected, and the value $\delta t^* = \delta t_{min}$ is chosen as a measurement of the TOF correction.

In the presence of noise in the received intensity signal I(t), the accuracy of the TOF measurement may be improved through integration. One method of integration is to form a set of objective functions $\{F_k(\delta t), k=1 \text{ to } K\}$, where each $F_k$ corresponds to a different subset of the N sub-beams, or to a different integration time interval in equations 3 and 4. The objective function F obtained by summing the K objective functions $F_k$ is used to find a global minimum point and the corresponding measured TOF correction, $\delta t^* = \delta t_{min}$.

A second method of integration is to fit a spline curve to several points in the neighborhood of the point ($\delta t_{min}$, $F_{min}$), and then to find the value at which the fitted spline curve has its minimum value. By combining data from neighboring points, the accuracy of the measured TOF correction is generally improved.

Block 170 calculates a corrected value of the target range, R\*, given by:

$$R^* = R_0 + c\,\delta t^*\,/2 \qquad\qquad\qquad \text{(Equation 8)}$$

The update rate of R\* depends on the integration time 2W and the calculation time for minimizing the objective function F, and is, for example, between 5 and 50 KHz.

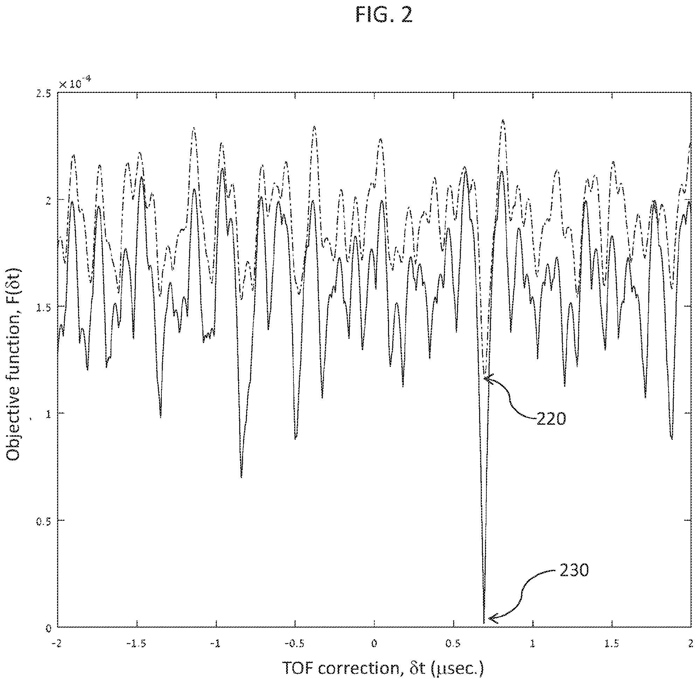

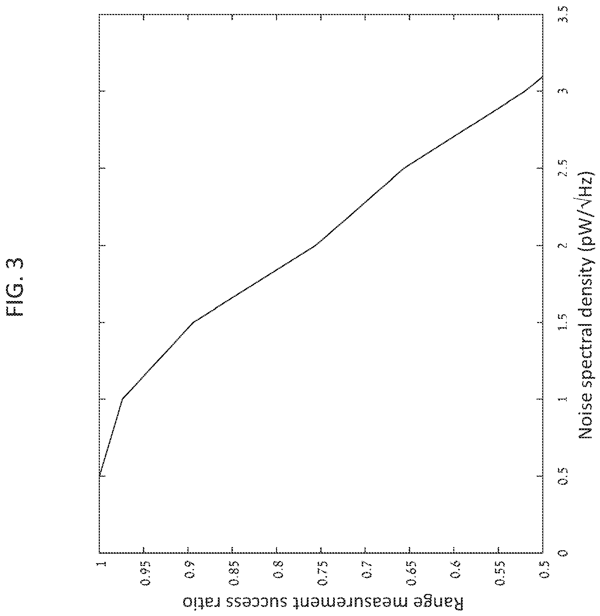

FIGs. 2 and 3 show plots that illustrate the excellent noise robustness of the range-finding apparatus and method, according to the invention. The plots are based upon digital simulations of laser beams and optical detection in the presence of noise.. In the simulations, the signal I(t) has an average power of 1 nano-watt (nW). The noise in I(t) is white and Gaussian, with a variable noise spectral density, measured in units of pico-watts per squareroot hertz (pW/√Hz). The initial range measurement $R_0$ has an uncertainty of $\pm\Delta R = \pm$ 300 meters, corresponding to a coarse TOF uncertainty of $\pm\Delta T = \pm 2\Delta R/c = \pm$ 2 microseconds ($\mu$sec.). In the prototype apparatus, there are 8 groups of sub-beams. Each group consists of 4 sub-beams, each having a sinusoidal optical phase modulation at a different frequency (N=4). Each of the 8 groups generates an objective function $F_k$, and the summed objective function, $F = \Sigma\,F_k$, is used to find a global minimum point and the associated TOF correction, $\delta t^*$.

FIG. 2 shows a plot of an exemplary objective function $F(\delta t)$, with and without noise, versus the TOF correction, $\delta t$, in units of $\mu$sec. The solid curve and the dashed curve correspond to the case of a noise-free and a noisy received intensity signal, I(t), respectively. The signal integration time is 2W = 16 microsec., the noise spectral density for the dashed curve is equal to 2 pW/√Hz, and the value p=1 is used in equation 7. Arrows 220 and 230 indicate the global minimum points of F in the noisy and noise-free cases, respectively. The global minimum points occur at nearly the same value of $\delta t$, indicating that the effect of noise on the measured value of the TOF correction is very small in this case. As the noise level increases, the measurement accuracy deteriorates, and at very high noise levels, the presence of many local minima may lead to difficulty in identifying the correct global minimum and to measurement failure.

FIG. 3 shows a plot of an exemplary range measurement success ratio versus noise spectral density, in units of pW/√Hz. A measurement success is defined as a simulation run in which the corrected range measurement, given by equation 8, is within $\pm$1 meter of the true target range, for an initial range uncertainty of $\pm$300 meters. This represents an uncertainty improvement factor of at least 300:1. According to FIG. 3, at noise spectral densities below 1.0 pW/√Hz, the success ratio is seen to be greater than or equal to 97%.

Repeat simulations indicate that the sum-of-absolute-values objective function (with p=1 in equation 7) generally yields better range correction measurements, in terms of uncertainty improvement factor and success ratio, than the sum-of-squares (p=2) objective function.

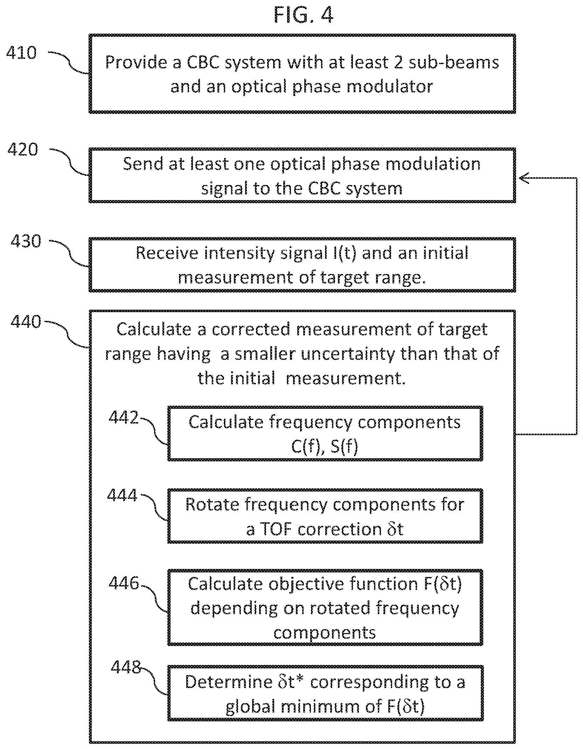

FIG. 4 is a block diagram of an exemplary range-finding method, according to the principles of the invention. The method includes the following steps:

Step 410: providing a CBC system with at least two partially coherent laser sub-beams and an optical phase modulator;

Step 420: sending at least one optical phase modulation signal to the CBC system;

Step 430: receiving a received intensity signal, I(t), from the CBC system, and an initial measurement of target range, from either the CBC system or an external range-finding device; and

Step 440: calculating a corrected measurement of target range having a smaller uncertainty than that of the initial measurement, using equation 8.

In an exemplary implementation of the method, step 440 may include the following additional steps:

Step 442: calculating frequency components of the intensity signal, using equations 3 and 4;

Step 444: rotating the frequency components C(f) and S(f), for a TOF correction, $\delta t$, using equations 5 and 6;

Step 446: calculating an objective function $F(\delta t)$ depending on the rotated frequency components, using equation 7; and

Step 448: determining $\delta t^*$ corresponding to a global minimum of $F(\delta t)$.

**EP 4 260 098 B1**

It will be appreciated that the above descriptions are intended only to serve as examples, and that many other embodiments are possible within the scope of the present invention as defined in the appended claims. For example, the algorithms performed by signal processor 110 may be implemented by a combination of one or more FPGAs, ASICs, and programmable signal processors. Alternatively, some or all of the signal processing may be relegated to the CBC system. Furthermore, many other configurations of the apparatus and method of the invention, besides those explicitly shown in FIGs. 1 and 4, respectively, will be readily apparent to those skilled in the art of laser range-finding, based upon the principles disclosed herein.

**Claims**

1. A range-finding apparatus (100) in communication with a coherent beam combining (CBC) system (10) which illuminates a target (45) with at least two partially coherent sub-beams (15), the apparatus comprising:

   a phase modulation controller (120) providing at least one optical phase modulation signal to the CBC system (10);
   a signal processor (110) configured to receive a time-varying received intensity signal (I(t)) from the CBC system (10) and to receive an initial measurement of target range ($R_0$) having an initial uncertainty;
   **characterized in that**
   the signal processor (110) is further configured to calculate frequency components (C(f), S(f)) of the received intensity signal (I(t)); to form rotated frequency components (CC(f,$\delta$t), SS(f,$\delta$t)) by rotating said frequency components through an angle proportional to a time-of-flight correction ($\delta$t);
   to calculate an objective function (F($\delta$t)) depending upon the rotated frequency components; to determine a global minimum ($\delta$t*) of the objective function;
   and to calculate a corrected measurement of target range (R*) having an uncertainty which is less than the initial uncertainty.

2. The apparatus of claim 1 wherein the at least one optical phase modulation signal comprises a sinusoidal frequency or a linear frequency modulation signal.

3. The apparatus of claim 1 wherein the at least one optical phase modulation signal has a bandwidth whose value is in a range of ten kilohertz to one hundred megahertz.

4. The apparatus of claim 1 wherein the frequency components comprise fundamental and second harmonic frequencies of the received intensity signal.

5. The apparatus of claim 1 wherein the signal processor (110) sends feedback to the phase modulation controller (120) comprising one or more updated parameters of the at least one optical phase modulation signal.

6. The apparatus of claim 1 wherein the initial measurement of target range ($R_0$) is provided by the CBC system (10) or by an external range-finding device.

7. The apparatus of claim 6 wherein the external range-finding device is selected from a group comprising a microwave radar, a millimeter-wave radar, and a forward looking infrared system.

8. The apparatus of claim 1 wherein the objective function (F($\delta$t)) depends upon absolute values of the rotated frequency components (CC(f,$\delta$t), SS(f,$\delta$t)).

9. The apparatus of claim 8 wherein the objective function (F($\delta$t)) comprises a sum-of-absolute-values objective function and/or a sum-of-squares objective function.

10. The apparatus of claim 1 wherein the corrected measurement of target range (R*) has an uncertainty which is equal in value to the initial uncertainty divided by a factor of at least 300.

11. The apparatus of claim 1 wherein the at least two partially coherent sub-beams (15) have coherence lengths whose values are less than or equal to one meter.

12. A range-finding method for use with a coherent beam combining (CBC) system (10) which illuminates a target (45) with at least two partially coherent laser sub-beams (15), **characterized in that** the method comprises the steps:

(a) providing a CBC system (10) comprising at least two partially coherent laser sub-beams (15) and an optical phase modulator (20);

(b) sending at least one optical phase modulation signal to the CBC system (10);

(c) receiving a time-varying received intensity signal (I(t)) from the CBC system (10), and an initial measurement of target range ($R_0$) from either the CBC system (10) or an external range-finding device;

(d) calculating frequency components (C(f), S(f)) of the intensity signal;

(e) rotating the frequency components through an angle proportional to a time-of-flight correction;

(f) calculating an objective function (F($\delta t$)) depending on the rotated frequency components (CC(f,$\delta t$), SS(f,$\delta t$));

(g) determining a global minimum ($\delta t^*$) of the objective function (F($\delta t$)); and

(h) calculating a corrected measurement of target range (R*) having an uncertainty which is less than that of the initial measurement of target range ($R_0$).

**Patentansprüche**

1. Reichweitenermittlungsvorrichtung (100) in Kommunikation mit einem kohärenten Strahlkombinationssystem (CBC) (10), das ein Ziel (45) mit mindestens zwei teilweise kohärenten Teilstrahlen (15) beleuchtet, die Vorrichtung umfassend:

   eine Phasenmodulationssteuerung (120), die mindestens ein optisches Phasenmodulationssignal an das CBC-System (10) bereitstellt;

   einen Signalprozessor (110), der so konfiguriert ist, dass er ein zeitlich variierendes empfangenes Intensitätssignal (I(t)) von dem CBC-System (10) empfängt und eine erste Messung der Zielreichweite ($R_0$), die eine anfängliche Unsicherheit aufweist, empfängt; **dadurch gekennzeichnet, dass**

   der Signalprozessor (110) ferner so konfiguriert ist, dass er Frequenzkomponenten (C(f), S(f)) des empfangenen Intensitätssignals (I(t)) berechnet; gedrehte Frequenzkomponenten (CC(f,$\delta t$), SS(f,$\delta t$)) durch Drehen der Fre-quenzkomponenten um einen Winkel bildet, der proportional zu einer Laufzeitkorrektur ($\delta t$) ist; eine Zielfunktion (F ($\delta t$)) in Abhängigkeit von den gedrehten Frequenzkomponenten berechnet; ein globales Minimum ($\delta t^*$) der Zielfunktion bestimmt; und eine korrigierte Messung der Zielreichweite (R*) berechnet, die eine Unsicherheit aufweist, die kleiner ist als die anfängliche Unsicherheit.

2. Vorrichtung nach Anspruch 1, wobei das mindestens eine optische Phasenmodulationssignal ein sinusförmiges Frequenz- oder ein lineares Frequenzmodulationssignal umfasst.

3. Vorrichtung nach Anspruch 1, wobei das mindestens eine optische Phasenmodulationssignal eine Bandbreite aufweist, deren Wert in einer Reichweite von zehn Kilohertz bis einhundert Megahertz liegt.

4. Vorrichtung nach Anspruch 1, wobei die Frequenzkomponenten Grundfrequenzen und die zweite Harmonische des empfangenen Intensitätssignals umfassen.

5. Vorrichtung nach Anspruch 1, wobei der Signalprozessor (110) eine Rückmeldung an die Phasenmodulationssteuerung (120) sendet, die einen oder mehrere aktualisierte(n) Parameter des mindestens einen optischen Phasenmodulationssignals umfasst.

6. Vorrichtung nach Anspruch 1, wobei die anfängliche Messung der Zielreichweite ($R_0$) durch das CBC-System (10) oder durch ein externes Reichweitenermittlungsgerät bereitgestellt wird.

7. Vorrichtung nach Anspruch 6, wobei das externe Reichweitenermittlungsgerät aus einer Gruppe ausgewählt ist, die ein Mikrowellenradar, ein Millimeterwellenradar und ein vorwärtsgerichtetes Infrarotsystem umfasst.

8. Vorrichtung nach Anspruch 1, wobei die Zielfunktion (F($\delta t$)) von den absoluten Werten der gedrehten Frequenz-komponenten (CC(f, $\delta t$), SS(f, $\delta t$)) abhängt.

9. Vorrichtung nach Anspruch 8, wobei die Zielfunktion (F($\delta t$) ) eine Zielfunktion aus der Summe der absoluten Werte und/oder eine Zielfunktion aus der Summe der Quadrate umfasst.

**10.** Vorrichtung nach Anspruch 1, wobei die korrigierte Messung der Zielreichweite (R\*) eine Unsicherheit aufweist, deren Wert gleich der anfänglichen Unsicherheit geteilt durch einen Faktor von mindestens 300 ist.

**11.** Vorrichtung nach Anspruch 1, wobei die mindestens zwei teilweise kohärenten Teilstrahlen (15) Kohärenzlängen aufweisen, deren Werte kleiner oder gleich einem Meter sind.

**12.** Reichweitenermittlungsverfahren zur Verwendung mit einem kohärenten Strahlkombinationssystem (CBC) (10), das ein Ziel (45) mit mindestens zwei teilweise kohärenten Laserteilstrahlen (15) beleuchtet, **dadurch gekennzeichnet, dass** das Verfahren die folgenden Schritte umfasst:

(a) Bereitstellen eines CBC-Systems (10), das mindestens zwei teilweise kohärente Laserteilstrahlen (15) und einen optischen Phasenmodulator (20) umfasst;
(b) Senden mindestens eines optischen Phasenmodulationssignals an das CBC-System (10);
(c) Empfangen eines zeitlich variierenden empfangenen Intensitätssignals (I(t)) von dem CBC-System (10) und einer ersten Messung der Zielreichweite ($R_0$) entweder von dem CBC-System (10) oder von einem externen Reichweitenermittlungsgerät;
(d) Berechnen von Frequenzkomponenten (C(f), S(f)) des Intensitätssignals;
(e) Drehen der Frequenzkomponenten um einen Winkel, der proportional zu einer Laufzeitkorrektur ist;
(f) Berechnen einer Zielfunktion (F($\delta$t)) in Abhängigkeit von den gedrehten Frequenzkomponenten (CC(f, $\delta$t), SS(f,$\delta$t));
(g) Bestimmen eines globalen Minimums ($\delta$t\*) der Zielfunktion (F($\delta$t)); und
(h) Berechnen einer korrigierten Messung der Zielreichweite (R\*), die eine Unsicherheit aufweist, die geringer ist als die der anfänglichen Messung der Zielreichweite ($R_0$).

## Revendications

**1.** Appareil de télémétrie (100) en communication avec un système (10) de combinaison de faisceaux cohérente (CBC pour « coherent beam combining ») qui éclaire une cible (45) avec au moins deux sous-faisceaux (15) partiellement cohérents, l'appareil comprenant :

un contrôleur (120) de modulation de phase fournissant au moins un signal de modulation de phase optique au système (10) CBC ;
un processeur de signaux (110) configuré pour recevoir du système (10) CBC un signal d'intensité (I(t)) reçu variant dans le temps et pour recevoir une mesure initiale ($R_0$) de la portée cible présentant une incertitude initiale ;
**caractérisé en ce que**
le processeur de signaux (110) est en outre configuré pour calculer des composantes de fréquence (C(f), S(f)) du signal d'intensité (I(t)) reçu ; pour former des composantes de fréquence (CC(f,$\delta$t), SS(f,$\delta$t)) mises en rotation en mettant en rotation lesdites composantes de fréquence selon un angle proportionnel à une correction ($\delta$t) de temps de vol ; pour calculer une fonction objective (F($\delta$t)) dépendant des composantes de fréquence mises en rotation ; pour déterminer un minimum global ($\delta$t\*) de la fonction objective ; et pour calculer une mesure corrigée (R\*) de la portée cible ayant une incertitude qui est inférieure à l'incertitude initiale.

**2.** Appareil selon la revendication 1, dans lequel l'au moins un signal de modulation de phase optique comprend un signal de modulation de fréquence sinusoïdale ou de fréquence linéaire.

**3.** Appareil selon la revendication 1, dans lequel l'au moins un signal de modulation de phase optique a une largeur de bande dont la valeur est comprise dans une gamme de dix kilohertz à cent mégahertz.

**4.** Appareil selon la revendication 1, dans lequel les composantes de fréquence comprennent des fréquences fondamentales et des fréquences harmoniques de deuxième ordre du signal d'intensité reçu.

**5.** Appareil selon la revendication 1, dans lequel le processeur de signaux (110) envoie une rétroaction au contrôleur (120) de modulation de phase comprenant un ou plusieurs paramètres mis à jour de l'au moins un signal de modulation de phase optique.

**6.** Appareil selon la revendication 1, dans lequel la mesure initiale ($R_0$) de la portée cible est fournie par le système (10) CBC ou par un dispositif de télémétrie externe.

7. Appareil selon la revendication 6, dans lequel le dispositif de télémétrie externe est choisi dans un groupe comprenant un radar à micro-ondes, un radar à ondes millimétriques et un système infrarouge à balayage vers l'avant.

8. Appareil selon la revendication 1, dans lequel la fonction objective $(F(\delta t))$ dépend des valeurs absolues des composantes de fréquence $(CC(f,\delta t), SS(f,\delta t))$ mises en rotation.

9. Appareil selon la revendication 1, dans lequel la fonction objective $(F(\delta t))$ comprend une fonction objective somme des valeurs absolues et/ou une fonction objective somme des carrés.

10. Appareil selon la revendication 1, dans lequel la mesure corrigée (R*) de la portée cible présente une incertitude dont la valeur est égale à l'incertitude initiale divisée par un facteur d'au moins 300.

11. Appareil selon la revendication 1, dans lequel les au moins deux sous-faisceaux (15) partiellement cohérents ont des longueurs de cohérence dont les valeurs sont inférieures ou égales à un mètre.

12. Procédé de télémétrie pour utilisation avec un système (10) de combinaison de faisceaux cohérente (CBC pour « coherent beam combining ») qui éclaire une cible (45) avec au moins deux sous-faisceaux (15) laser partiellement cohérents, le procédé étant **caractérisé en ce qu'**il comprend les étapes de :

   (a) fourniture d'un système (10) CBC comprenant au moins deux sous-faisceaux (15) laser partiellement cohérents et un modulateur (20) de phase optique ;
   (b) envoi d'au moins un signal de modulation de phase optique au système (10) CBC ;
   (c) réception, en provenance du système (10) CBC, d'un signal d'intensité (I(t)) reçu variant dans le temps et, en provenance soit du système (10) CBC, soit d'un dispositif de télémétrie externe, d'une mesure initiale $(R_0)$ de la portée cible ;
   (d) calcul des composantes de fréquence (C(f), S(f)) du signal d'intensité ;
   (e) rotation des composantes de fréquence selon un angle proportionnel à une correction du temps de vol ;
   (f) calcul d'une fonction objective $(F(\delta t))$ dépendant des composantes de fréquence $(CC(f,\delta t), Ss(f,\delta t))$ mises en rotation ;
   (g) détermination d'un minimum global $(\delta t^*)$ de la fonction objective $(F(\delta t))$ ; et
   (h) calcul d'une mesure corrigée (R*) de la portée cible présentant une incertitude inférieure à celle de la mesure initiale $(R_0)$ de la portée cible.

FIG. 1

FIG. 2

FIG. 3

## FIG. 4

410 — Provide a CBC system with at least 2 sub-beams and an optical phase modulator

420 — Send at least one optical phase modulation signal to the CBC system

430 — Receive intensity signal I(t) and an initial measurement of target range.

440 — Calculate a corrected measurement of target range having a smaller uncertainty than that of the initial measurement.

442 — Calculate frequency components C(f), S(f)

444 — Rotate frequency components for a TOF correction δt

446 — Calculate objective function F(δt) depending on rotated frequency components

448 — Determine δt* corresponding to a global minimum of F(δt)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020016824 A1, D. Golubchik

**Non-patent literature cited in the description**

- **CHEN YU**. Multi-Frequency Modulation Laser Range Finding System. *Modern Applied Science*, 2015, vol. 9 (4)